# EUROPEAN PATENT APPLICATION

(11) **EP 4 092 387 A1**
(43) Date of publication of application: **23.11.2022**
(21) Application number: 22162671.6
(22) Date of filing: 17.03.2022
(51) Int. Cl.: G01C 21/34, G01C 21/36, G06Q 50/30, G06Q 10/06, G08G 1/00

(54) **METHOD AND SYSTEM FOR RIDER PICKUPS WITH AUTONOMOUS VEHICLES**

(30) Priority: 25.03.2021 US 202117212458
(71) Applicant: WAYMO LLC, Mountain View, CA 94043 (US)
(72) Inventor: SCHWENDIMANN, Lauren, Mountain View, CA 94043 (US); POWELL, Ryan, Mountain View, CA 94043 (US); PANDIT, Salil, Mountain View, CA 94043 (US); PATEL, Nirmal, Mountain View, CA 94043 (US)
(74) Representative: Chettle, John Edward

(57) **Abstract**

The technology involves pickups of riders by autonomous vehicles in a manner that ensures the rider is picked up within an estimated time of arrival (ETA). For instance, in accordance with customer authorization, the autonomous vehicle may loiter or otherwise stay within a certain proximity (e.g., distance or time) to guarantee rider pickup within a predetermined time. One vehicle may be assigned to a rider for a set timeframe or multiple vehicles may be allocated to a particular event. Either approach may be used to ensure rider pickup with minimal waiting. One benefit is to avoid user-initiated ride requests when the customer is ready to depart a location, because a vehicle will already be present and ready to take the rider to their desired destination. Loitering may include prepositioning a vehicle at a given place, or driving autonomously to be nearby as needed.

## Description

### BACKGROUND

Autonomous vehicles, such as vehicles that do not require a human driver, can be used to aid in the transport of riders from one location to another. Such vehicles may operate in a fully autonomous mode without a person providing driving input. For an autonomous vehicle, picking up a rider from a predetermined location while maintaining technical efficiency at the vehicle and making efficient use of road infrastructure may be challenging for various reasons, especially when the person could leave a building or other place from different exits, or there may be traffic or other vehicles parked in a loading/unloading zone that prevent pickup at a selected location. While it may be desirable to promptly pick up the rider when and where they expect it, these types of situations can cause unnecessary delays and technical inefficiencies as the autonomous vehicle seeks to reach the selected location at the expected time. In addition to the technical inefficiencies associated with the use of power and hardware componentry at the autonomous vehicle, this may create confusion or frustration for a rider, potentially resulting not only in wasted vehicle resources but also a negative rider experience.

### BRIEF SUMMARY

The technology relates to pickups by autonomous vehicles, including ensuring an estimated time of arrival (ETA) that meets rider requirements while maintaining technical efficiencies at the autonomous vehicle. Scheduled pickups can be delayed for various reasons, such as congestion, parking or idling regulations at a pickup spot, weather conditions, etc. According to one aspect, in accordance with rider (e.g. customer) authorization, the autonomous vehicle may loiter or otherwise stay close to guarantee rider pickup within a predetermined time. One vehicle may be assigned to one rider for a set timeframe in a 1: 1 arrangement (e.g., 6 pm until midnight), or multiple vehicles may be allocated to a particular event in an N:N arrangement (e.g., conclusion of a concert, movie or ball game, with N potential riders). Either approach may be used to ensure rider pickup without excessive use of technical resources at the autonomous vehicle(s) and with minimal waiting. One benefit is to avoid user-initiated ride requests when the rider (e.g. customer) is ready to depart a location, because a vehicle will already be nearby ready to take the customer to their desired destination, or destinations when the customer may be visiting different locations such as on a shopping trip.

According to one aspect of the technology, a method of managing rider pickups for a vehicle operating in an autonomous driving mode is provided. The method comprises receiving, by one or more processors associated with the vehicle operating in the autonomous driving mode, trip information corresponding to a trip for a rider, the trip information including an estimated time to pick up the rider; identifying, by the one or more processors, a boundary representing at least one of a physical distance or a temporal limit for which the vehicle is able to pick up the rider by the estimated pickup time; causing, by the one or more processors, a driving system of the vehicle to preposition the vehicle within the boundary in the autonomous driving mode to ensure the vehicle is able to pick up the rider by the estimated pickup time; and after prepositioning the vehicle and upon receiving location information for the rider, causing, by the one or more processors, the driving system to maneuver the vehicle to a determined pickup location before or at the estimated pickup time in the autonomous driving mode.

In one example, the method further comprising determining a set of pickup location options at which to pick up the rider by the estimated pickup time; and selecting a given one of the pickup location options from the set based upon the received location information. Here, selecting the given pickup location may include evaluating at least one of traffic congestion, a parking restriction, a loitering restriction, or an adverse environmental condition.

In another example, the method further comprising dynamically adjusting the determined pickup location to a different pickup location upon determining that a location of the rider has changed. In this case, determining that the location of the rider has changed may include identifying that the rider has moved towards an exit different from an initially identified exit of a place of interest. The method may further comprise providing a notification to the rider identifying a change to the different pickup location.

The method may include varying a prepositioned location of the vehicle based on receiving updates to the location information. The method may additionally or alternatively include varying a prepositioned location of the vehicle based on a confidence value associated with a type of the location information.

In a further example, causing the driving system of the vehicle to preposition the vehicle may be based at least in part on a walking time to the determined pickup location. Alternatively or additionally, causing the driving system of the vehicle to preposition the vehicle may be based at least in part on whether a preposition location has a metered parking spot. Alternatively or additionally, causing the driving system of the vehicle to preposition the vehicle may include evaluating multiple preposition location options based on whether any preposition location option has a line of sight to the determined pickup location. In this case, the evaluating may include selecting a first one of the multiple preposition location options having the line of sight to the determined pickup location even though the first option is farther from the determined pickup location than another one of the multiple preposition location options. In another example, the location information is either a location of the rider or a location of a client device of the rider.

According to one scenario, the vehicle is a given vehicle of a fleet of vehicles configured for operation in the autonomous driving mode, and the method further includes selecting the given vehicle from the fleet of vehicles based on either the given vehicle's proximity to the boundary or the given vehicle's proximity to the determined pickup location.

According to another scenario, the vehicle is one of a fleet of vehicles configured for operation in the autonomous driving mode, the rider is one of a group of riders, and the method further includes dispatching one or more vehicles from the fleet of vehicles to pick up the group of riders based on either proximity to the boundary or proximity to the determined pickup location.

According to another aspect of the technology, a vehicle is configured to operate in an autonomous driving mode. The vehicle comprises a perception system, a driving system, a positioning system and a control system. The perception system includes one or more sensors. The one or more sensors are configured to receive sensor data associated with objects in an external environment of the vehicle. The driving system includes a steering subsystem, an acceleration subsystem and a deceleration subsystem to control driving of the vehicle. The positioning system is configured to determine a current position of the vehicle. The control system includes one or more processors. The control system is operatively coupled to the driving system, the perception system and the positioning system. The control system is configured to receive trip information corresponding to a trip for a rider, the trip information including an estimated time to pick up the rider; identify a boundary representing at least one of a physical distance or a temporal limit for which the vehicle is able to pick up the rider by the estimated pickup time; cause the driving system of the vehicle to preposition the vehicle within the boundary in the autonomous driving mode to ensure the vehicle is able to pick up the rider by the estimated pickup time; and after prepositioning the vehicle and upon receiving location information for the rider, cause the driving system to maneuver the vehicle to a determined pickup location before or at the estimated pickup time in the autonomous driving mode.

In one example, the control system is further configured to: determine a set of pickup location options at which to pick up the rider by the estimated pickup time; and select a given one of the pickup location options from the set based upon the received location information. In another example, the control system is further configured to dynamically adjust the determined pickup location to a different pickup location upon determining that a location of the rider has changed.

Causing the driving system of the vehicle to preposition the vehicle may be based at least in part on one or more of: a walking time to the determined pickup location; whether a preposition location has a metered parking spot; or evaluation of multiple preposition location options based on whether any preposition location option has a line of sight to the determined pickup location. Here, the evaluation may include selection of a first one of the multiple preposition location options having the line of sight to the determined pickup location even though the first option is farther from the determined pickup location than another one of the multiple preposition location options.

### BRIEF DESCRIPTION OF THE DRAWINGS

Figs. 1A-B illustrate an example passenger-type vehicle configured for use with aspects of the technology.
Figs. 1C-D illustrate an example articulated bus arrangement for use with aspects of the technology.
Fig. 2 is a block diagram of systems of an example vehicle in accordance with aspects of the technology.
Figs. 3A-B illustrates exemplary map information in accordance with aspects of the technology.
Figs. 4A-B illustrate examples of displayed pickup and trip planner information in accordance with aspects of the technology.
Fig. 5 illustrate a pickup boundary example in accordance with aspects of the technology.
Figs. 6A-C illustrate pickup examples in accordance with aspects of the technology.
Figs. 7A-B illustrate a pickup request and confirmation in accordance with aspects of the technology.
Figs. 8A-B illustrate a user device interface presenting pickup-related information in accordance with aspects of the technology.
Figs. 9A-B illustrate a system in accordance with aspects of the technology.
Fig. 10 illustrates an example method in accordance with aspects of the technology.

### DETAILED DESCRIPTION

Aspects of the technology involve rider pickups by autonomous vehicles, in which the rider can be confident that their vehicle will be where they need it to be when they are ready to depart. This can involve guaranteeing an ETA to the rider. A single vehicle may be assigned to a customer and operate in a "loiter" mode, so that the vehicle remains close (in time and/or distance) in order to satisfy a desired ETA. The rider may elect to share certain location information for a particular timeframe, such as Friday evening between 6pm and midnight. This can be based on location data from the user's mobile phone, smart watch or other client device (the device's location), calendar or contact details (the user's location), or the like. The rider can have confidence knowing that his/her ride will be there when it is needed.

### EXAMPLE VEHICLE SYSTEMS

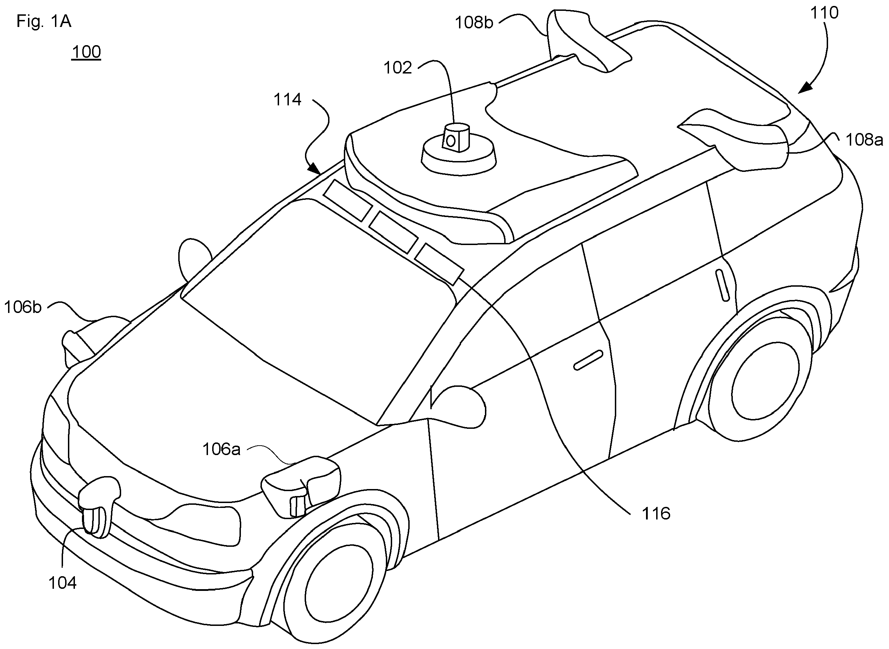

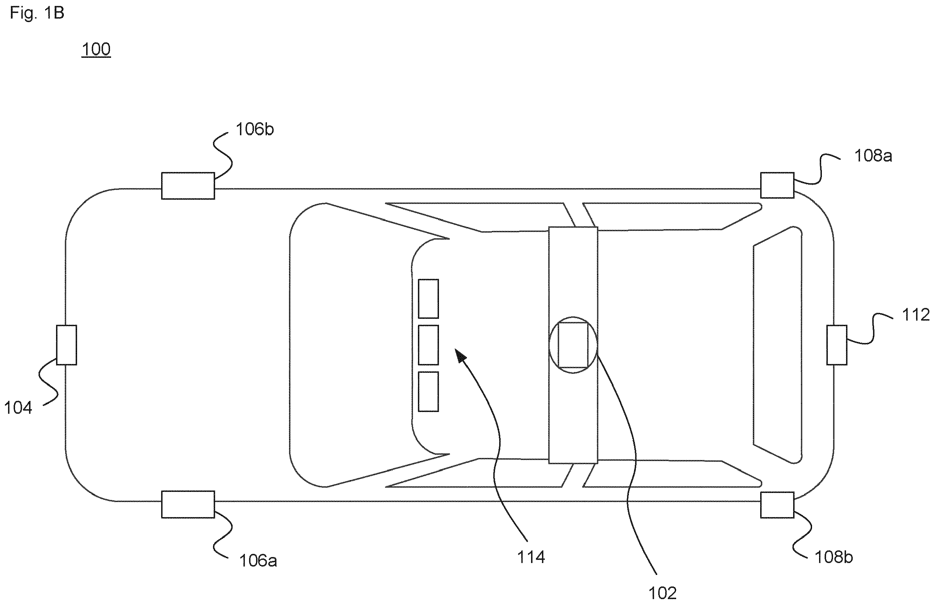

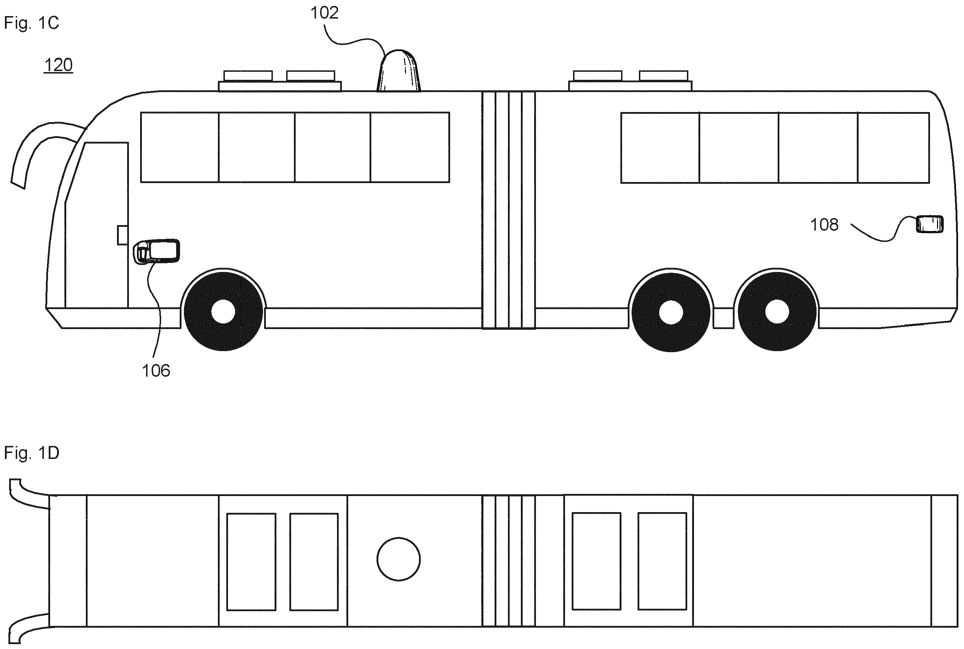

Fig. 1A illustrates a perspective view of an example passenger vehicle 100, such as a minivan, sport utility vehicle (SUV), sedan or other vehicle that may be used in accordance with aspects of the technology to pick up and drop off passengers, make food deliveries, transport cargo, etc. Fig. 1B illustrates a top-down view of the passenger vehicle 100. As shown, the passenger vehicle 100 includes various sensors for obtaining information about the vehicle's external environment, which enable the vehicle to operate in an autonomous driving mode. For instance, a roof-top housing 102 may include one or more lidar sensors as well as various cameras, radar units, infrared and/or acoustical sensors. Housing 104, located at the front end of vehicle 100, and housings 106a, 106b on the driver's and passenger's sides of the vehicle, may each incorporate lidar, radar, camera and/or other sensors. For example, housing 106a may be located in front of the driver's side door along a quarter panel of the vehicle. As shown, the passenger vehicle 100 also includes housings 108a, 108b for radar units, lidar and/or cameras also located towards the rear roof portion of the vehicle. Additional lidar, radar units and/or cameras (not shown) may be located at other places along the vehicle 100. For instance, arrow 110 indicates that a sensor unit (112 in Fig. 1B) may be positioned along the rear of the vehicle 100, such as on or adjacent to the bumper. And arrow 114 indicates a series of sensor units 116 arranged along a forward-facing direction of the vehicle. In some examples, the passenger vehicle 100 also may include various sensors for obtaining information about the vehicle's interior spaces (not shown).

Figs. 1C-D illustrate an example of another type of vehicle 120, such as an articulated bus, which may be employed in accordance with aspects of the technology, such as to pick up and drop off passengers. As with the passenger vehicle 100, the articulated bus 120 may include one or more sensor units disposed along different areas of the vehicle.

By way of example, each sensor unit may include one or more sensors, such as lidar, radar, camera (e.g., optical or infrared), acoustical (e.g., microphone or sonar-type sensor), inertial (e.g., accelerometer, gyroscope, etc.) or other sensors (e.g., positioning sensors such as GPS sensors). While certain aspects of the disclosure may be particularly useful in connection with specific types of vehicles, the vehicle may be any type of vehicle configured for self-driving in an autonomous driving mode, including, but not limited to, cars, vans, cargo trucks, motorcycles, buses, recreational vehicles, emergency vehicles, etc.

There are different degrees of autonomy that may occur for a vehicle operating in a partially or fully autonomous driving mode. The U.S. National Highway Traffic Safety Administration and the Society of Automotive Engineers have identified different levels to indicate how much, or how little, the vehicle controls the driving. For instance, Level 0 has no automation and the driver makes all driving-related decisions. The lowest semi-autonomous mode, Level 1, includes some drive assistance such as cruise control. Level 2 has partial automation of certain driving operations, while Level 3 involves conditional automation that can enable a person in the driver's seat to take control as warranted. In contrast, Level 4 is a high automation level where the vehicle is able to drive fully autonomously without human assistance in select conditions. And Level 5 is a fully autonomous mode in which the vehicle is able to drive without assistance in all situations. The architectures, components, systems and methods described herein can function in any of the semi or fully-autonomous modes, e.g., Levels 1-5, which are referred to herein as autonomous driving modes. Thus, reference to an autonomous driving mode includes both partial and full autonomy.

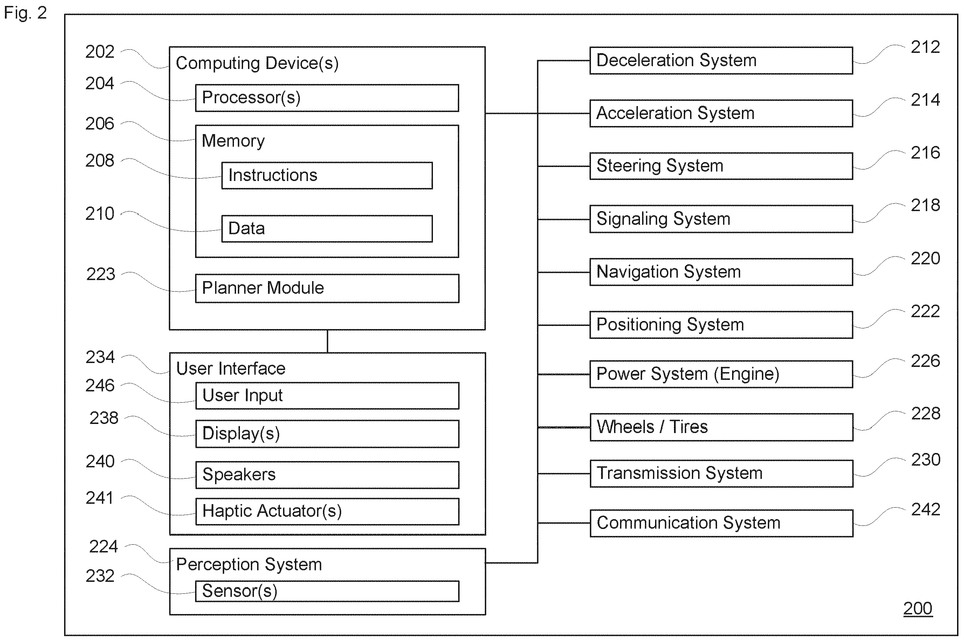

Fig. 2 illustrates a block diagram 200 with various components and systems of an exemplary vehicle, such as passenger vehicle 100 or bus 120, to operate in an autonomous driving mode. As shown, the block diagram 200 includes one or more computing devices 202, such as computing devices containing one or more processors 204, memory 206 and other components typically present in general purpose computing devices. The memory 206 stores information accessible by the one or more processors 204, including instructions 208 and data 210 that may be executed or otherwise used by the processor(s) 204. The computing system may control overall operation of the vehicle when operating in an autonomous driving mode.

The memory 206 stores information accessible by the processors 204, including instructions 208 and data 210 that may be executed or otherwise used by the processors 204. The memory 206 may be of any type capable of storing information accessible by the processor, including a computing device-readable medium. The memory is a non-transitory medium such as a hard-drive, memory card, optical disk, solid-state, etc. Systems may include different combinations of the foregoing, whereby different portions of the instructions and data are stored on different types of media.

The instructions 208 may be any set of instructions to be executed directly (such as machine code) or indirectly (such as scripts) by the processor(s). For example, the instructions may be stored as computing device code on the computing device-readable medium. In that regard, the terms "instructions", "modules" and "programs" may be used interchangeably herein. The instructions may be stored in object code format for direct processing by the processor, or in any other computing device language including scripts or collections of independent source code modules that are interpreted on demand or compiled in advance. The data 210 may be retrieved, stored or modified by one or more processors 204 in accordance with the instructions 208. In one example, some or all of the memory 206 may be an event data recorder or other secure data storage system configured to store vehicle diagnostics and/or obtained sensor data, which may be on board the vehicle or remote, depending on the implementation.

The processors 204 may be any conventional processors, such as commercially available CPUs. Alternatively, each processor may be a dedicated device such as an ASIC or other hardware-based processor. Although Fig. 2 functionally illustrates the processors, memory, and other elements of computing devices 202 as being within the same block, such devices may actually include multiple processors, computing devices, or memories that may or may not be stored within the same physical housing. Similarly, the memory 206 may be a hard drive or other storage media located in a housing different from that of the processor(s) 204. Accordingly, references to a processor or computing device will be understood to include references to a collection of processors or computing devices or memories that may or may not operate in parallel.

In one example, the computing devices 202 may form an on-board autonomous driving computing system incorporated into vehicle 100. The autonomous driving computing system is configured to communicate with various components of the vehicle. For example, the computing devices 202 may be in communication with various systems of the vehicle, including a driving system including a deceleration system 212 (for controlling braking of the vehicle), acceleration system 214 (for controlling acceleration of the vehicle), steering system 216 (for controlling the orientation of the wheels and direction of the vehicle), signaling system 218 (for controlling turn signals), navigation system 220 (for navigating the vehicle to a location or around objects) and a positioning system 222 (for determining the position of the vehicle, e.g., including the vehicle's pose). The autonomous driving computing system may employ a planner module 223, in accordance with the navigation system 220, the positioning system 222 and/or other components of the system, e.g., for determining a route from a starting point to one or more destinations, selecting a pickup and/or drop-off point or zone for each location, or for otherwise making modifications to various driving aspects in view of current or expected traffic, weather or other conditions.

The computing devices 202 are also operatively coupled to a perception system 224 (that is configured to detect objects in the vehicle's environment), a power system 226 (for example, a battery and/or gas or diesel powered engine) and a transmission system 230 in order to control the movement, speed, etc., of the vehicle in accordance with the instructions 208 of memory 206 in an autonomous driving mode which does not require or need continuous or periodic input from a passenger of the vehicle. Some or all of the wheels/tires 228 are coupled to the transmission system 230, and the computing devices 202 may be able to receive information about tire pressure, balance and other factors that may impact driving in an autonomous mode.

The computing devices 202 may control the direction and speed of the vehicle, e.g., via the planner module 223, by controlling various components. By way of example, computing devices 202 may navigate the vehicle to a destination location completely autonomously using data from the map information and navigation system 220. Computing devices 202 may use the positioning system 222 to determine the vehicle's location and the perception system 224 to detect and respond to objects when needed to reach the location safely. In order to do so, computing devices 202 may cause the vehicle to accelerate (e.g., by sending a signal for increasing fuel or other energy provided to the engine by acceleration system 214), decelerate (e.g., by sending a signal for decreasing the fuel supplied to the engine, changing gears, and/or by applying brakes by deceleration system 212), change direction (e.g., by sending a signal for turning the front or other wheels of vehicle 100 by steering system 216), and signal such changes (e.g., by lighting turn signals of signaling system 218). Thus, the acceleration system 214 and deceleration system 212 may be a part of a drivetrain or other type of transmission system 230 that includes various components between an engine of the vehicle and the wheels of the vehicle. Again, by controlling these systems, computing devices 202 may also control the transmission system 230 of the vehicle in order to maneuver the vehicle autonomously.

Navigation system 220 may be used by computing devices 202 in order to determine and follow a route to a location. In this regard, the navigation system 220 and/or memory 206 may store map information, e.g., highly detailed maps that computing devices 202 can use to navigate or control the vehicle. As an example, these maps may identify the shape and elevation of roadways, lane markers, intersections, crosswalks, speed limits, traffic signal lights or signs, street lamps, buildings, signs, real time traffic information, vegetation, or other such objects and information. The lane markers may include features such as solid or broken double or single lane lines, solid or broken lane lines, reflectors, etc. A given lane may be associated with left and/or right lane lines or other lane markers that define the boundary of the lane. Thus, most lanes may be bounded by a left edge of one lane line and a right edge of another lane line.

While the map information may be an image-based map, the map information need not be entirely image based (e.g., raster). For example, the map information may include one or more roadgraphs or graph networks of information such as roads, lanes, intersections, and the connections between these features. Each feature may be stored as graph data and may be associated with information such as a geographic location and whether or not it is linked to other related features. For example, a stop light, stop sign or street lamp may be linked to a road and an intersection, etc. In some examples, the associated data may include grid-based indices of a roadgraph to allow for efficient lookup of certain roadgraph features.

The perception system 224 includes sensors 232 for detecting objects external to the vehicle. The sensors 232 are located in one or more sensor units around the vehicle. The detected objects may be other vehicles, obstacles in the roadway, traffic signals, signs, trees, bicyclists, pedestrians, etc. The sensors 232 may also detect certain aspects of weather or other environmental conditions, such as snow, rain or water spray, or puddles, ice or other materials on the roadway.

By way of example only, the perception system 224 may include one or more lidar sensors, radar units, cameras (e.g., optical imaging devices, with or without a neutral-density filter (ND) filter), positioning sensors (e.g., gyroscopes, accelerometers and/or other inertial components), infrared sensors, acoustical sensors (e.g., microphones or sonar transducers), and/or any other detection devices that record data which may be processed by computing devices 202. Such sensors of the perception system 224 may detect objects outside of the vehicle and their characteristics such as location, orientation, size, shape, type (for instance, vehicle, pedestrian, bicyclist, etc.), heading, speed of movement relative to the vehicle, etc. Information obtained from the sensors may include 2D or 3D point cloud data (e.g., for radar or lidar sensors), imagery from the cameras or other optical imaging devices, sound data across one or more frequency bands, etc.

The perception system 224 may also include other sensors within the vehicle to detect objects and conditions within the vehicle, such as in the passenger compartment. For instance, such sensors may detect, e.g., one or more persons, pets, packages or other cargo, etc., as well as conditions within and/or outside the vehicle such as temperature, humidity, etc. This can include detecting where the rider(s) is sitting within the vehicle (e.g., front passenger seat versus second or third row seat, left side of the vehicle versus the right side, etc.). The interior sensors may detect the proximity, position and/or line of sight of the rider in relation to one or more display devices of the passenger compartment. Still further, sensors 232 of the perception system 224 may measure the rate of rotation of the wheels 228, an amount or a type of braking by the deceleration system 212, and other factors associated with the equipment of the vehicle itself.

The raw data obtained by the sensors can be processed by the perception system 224 and/or sent for further processing to the computing devices 202 periodically or continuously as the data is generated by the perception system 224. Computing devices 202 may use the positioning system 222 to determine the vehicle's location and perception system 224 to detect and respond to objects when needed to reach the location safely, e.g., via adjustments made by planner module 223, including adjustments in operation to deal with occlusions, congestion or other roadway issues, weather, etc.

As illustrated in Figs. 1A-B, certain sensors of the perception system 224 may be incorporated into one or more sensor assemblies or housings. In one example, these may be integrated into the side-view mirrors on the vehicle. In another example, other sensors may be part of the roof-top housing 102, or other sensor housings or units 106a,b, 108a,b, 112 and/or 116. The computing devices 202 may communicate with the sensor assemblies located on or otherwise distributed along the vehicle. Each assembly may have one or more types of sensors such as those described above.

Returning to Fig. 2, computing devices 202 may include all of the components normally used in connection with a computing device such as the processor and memory described above as well as a user interface subsystem 234. The user interface subsystem 234 may include one or more user inputs 236 (e.g., a mouse, keyboard, touch screen and/or microphone) and one or more display devices 238 (e.g., a monitor having a screen or any other electrical device that is operable to display information). In this regard, an internal electronic display may be located within a cabin of the vehicle (not shown) and may be used by computing devices 202 to provide information to passengers within the vehicle. By way of example, displays may be located, e.g., along the dashboard, on the rear of the front row of seats, on a center console between the front row seats, along the doors of the vehicle, extending from an armrest, etc. Other output devices, such as speaker(s) 240 and/or haptic actuators 241 may also be located within the vehicle. There may also be one or more vehicle sound generators and/or external speakers, which may be used to communicate information to riders or other people outside the vehicle, especially at pickup. The display(s) and/or other output devices may be used to indicate to a rider the location of a drop off point or other location of interest, an estimated time until disembarking, or other relevant ride-related information.

The passenger vehicle also includes a communication system 242. For instance, the communication system 242 may also include one or more wireless configurations to facilitate communication with other computing devices, such as rider computing devices within the vehicle, computing devices external to the vehicle such as with users awaiting pickup (or delivery of a package, etc.), in another nearby vehicle on the roadway, and/or a remote server system. The network connections may include short range communication protocols such as Bluetooth^{™}, Bluetooth^{™} low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

While the components and systems of Fig. 2 are generally described in relation to a passenger vehicle arrangement, as noted above the technology may be employed with other types of vehicles, such as the bus 120 of Figs. 1C-D. In this type of larger vehicle, the user interface elements such as displays, microphones, speakers or haptic actuators may be distributed so that each rider has their own information presentation unit and/or one or more common units that can present status information to larger groups of riders.

### EXAMPLE IMPLEMENTATIONS

In view of the architectures and configurations described above and illustrated in the figures, various aspects of the technology will now be described.

A self-driving vehicle, such as a vehicle with level 4 or level 5 autonomy that can perform driving actions without human operation, has unique requirements and capabilities. This includes making driving decisions based on a planned route and pickup and drop off locations, received traffic information, objects in the external environment detected by the sensors of the vehicle's perception system, etc. Traffic congestion, legal restrictions on parking or loitering, inclement weather (e.g., heavy rain, dense fog and/or lightening) or other conditions (such as icy sidewalks, puddles, debris, work or construction zone signage, traffic barricades or safety barriers, etc.) may affect the ability of the vehicle to pick up or drop off riders or cargo (e.g., groceries or packages) at an initially selected location.

The customer may desire to be picked up at a specific time, or no later than a given time. There may also be some uncertainty about the exact location where a pickup or drop off should be made for the reasons noted above. It may not be possible for an assigned vehicle to depart from a depot or other location and pick up the rider at the desired time, especially during rush hour or if other delays occur prior to pick up. It may also not be feasible to deploy a fleet of vehicles across a service area in the hopes that one will be close enough to pick up the rider at the desired time. Thus, the autonomous vehicle may loiter in an area near to the proposed pickup location, where the vehicle loiters in accordance with rider-related information. This can include a time window where the rider needs a vehicle to be available (e.g., for dinner and a movie), location information associated with a client device (e.g., mobile phone, smart watch or other wearable computing device), an agreed-upon maximum pickup ETA, etc.

### EXAMPLE SCENARIOS

In one aspect, a user (e.g., a rider or other customer) may download an application for requesting a vehicle to a client computing device. For example, users may download the application via a link in an email, directly from a website, or an application store to their respective client computing devices, such as mobile phones, tablet PCs, laptops or wearable computers (e.g., smart watches). In response to user input, a client computing device may transmit a request for the application over the network, for example, to one or more server computing devices, and in response, receive the application. The application may be installed locally at the client computing device. The user may use the application to request a vehicle. As part of this, the user may identify a pickup location, a drop off location, or both. Any intermediate stops may also be identified (e.g., stopping off at a supermarket, bakery or dry cleaners on the way home after work). In this regard, the drop off location or any intermediate stops may be at a physically different location from an ultimate destination location.

The rider or other user may specify a pick up, intermediate destination, and final destination locations in various ways. As an example, a pickup location can be defaulted to a current location of the user's client computing device (e.g., based on GPS or other location information for the client computing device). Alternatively, the pickup location may be a recent or saved location associated with the user's account, included in a calendar event, associated with an event such as a concert, movie or sporting event, etc. The user may enter an address or other location information (e.g., via typing or speaking the location), tap a location on a map or select a location from a list in order to identify a pickup and/or destination location.

According to one aspect, the user can elect to share certain location-related information, including a pickup point, duration of time, etc. The election can include certain permissions such as sharing geolocation data from a client device, "temporal fencing" that shares user-related information for a set duration of time, and/or other permissions, such as a "follow me" option that enables a vehicle to loiter or otherwise ensure it is nearby to the user. Sharing such information enables a specific vehicle, or one vehicle of a fleet, to satisfy a pickup ETA requirement of the user. Another scenario involves a vehicle loitering based on a user's history, and "pushes" or suggests a trip to the user. For instance, suggest getting coffee at 9am on Saturday because the user usually get coffee at that day/time. Or the vehicle may loiter based on general patterns too. Thus, if the system knows that lots of people regularly go from A to B at time T, then one or more vehicles may be stationed near point A at time T.

Once the user is associated with a pickup, a vehicle, such as vehicle 100, may be assigned to the user. Dispatching instructions, such as from a vehicle dispatch service, may be sent to the assigned vehicle, including the pickup location, any intermediate destination(s), and the final destination (final drop off location). Based on this, the vehicle is able to control itself in the autonomous driving mode towards the pickup location, for instance by using the various systems of the vehicle as described above, in order to initiate and complete the trip. Although the examples herein relate to transporting passengers, similar features may be used for the transportation of goods or other cargo.

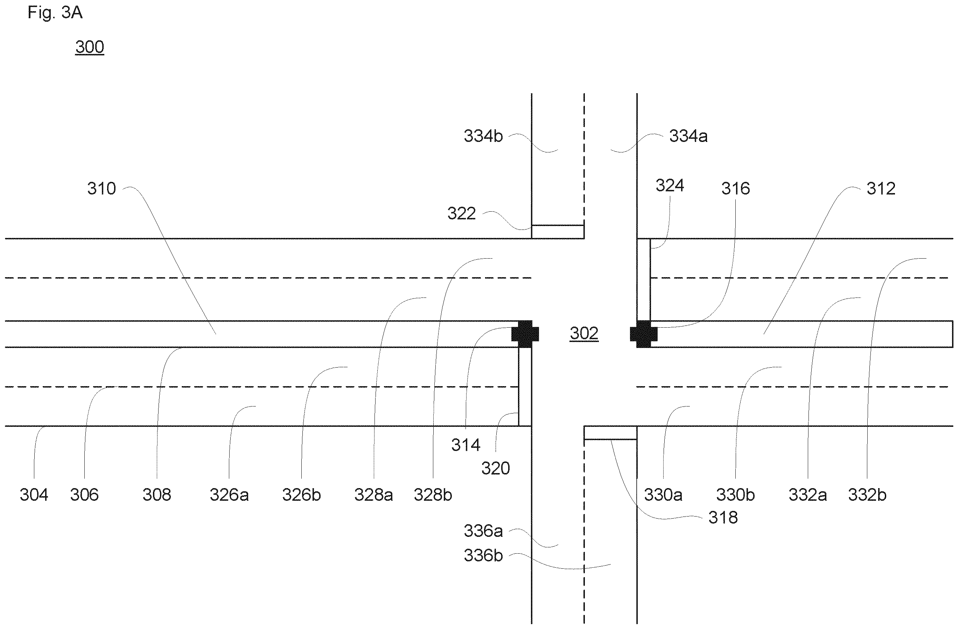

Figs. 3A-B illustrate an example 300 of map information for a section of roadway including intersection 302. Fig. 3A depicts certain map information that includes information identifying the shape, location, and other characteristics of lane markers or lane lines 304, 306, 308, median areas 310, 312, traffic signals 314, 316, as well as stop lines 318, 320, 322, 324. The lane lines may also define various lanes (e.g., 326a-b, 328a-b, 330a-b, 332a-b, 334a-b and 336a-b) or these lanes may also be explicitly identified in the map information. In addition to these features, the map information (e.g., roadgraphs) may also include information that identifies the direction of traffic, speed limits for each lane, as well as information that allows the system to determine whether the vehicle has the right of way to complete a particular maneuver (e.g., complete a turn, change lanes, cross a lane of traffic or proceed through an intersection), as well as other features such as curbs, buildings, waterways, vegetation, signs, etc.

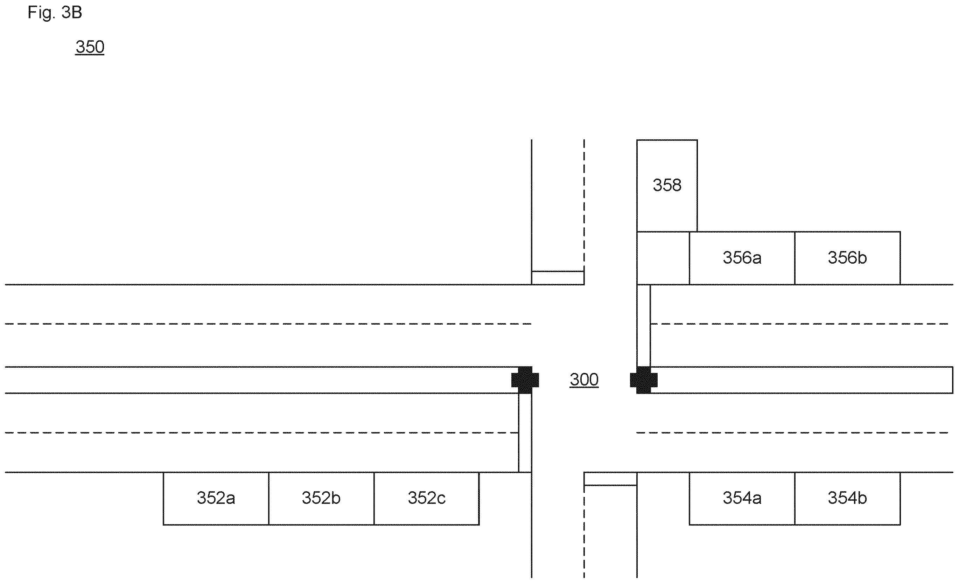

The map information may identify pullover locations, which may include one or more areas where a vehicle is able to stop and to pick up or drop off riders (or packages or other cargo). These areas may correspond to parking spaces, waiting areas, shoulders, parking lots or other places where the vehicle may loiter prior to picking up the rider. For instance, Fig. 3B depicts a view 350 showing parking areas 352-358 adjacent to different portions of the roadway. In particular, in this view the parking areas 352a-c are adjacent to lane 326a, parking areas 354a-b are adjacent to lane 330a, parking areas 356a-b are adjacent to lane 332b, and parking area 358 is adjacent to lane 334a).

In one scenario, these locations may correspond to parking spaces, but in other scenarios such locations may correspond to any type of area in which a vehicle is able to stop to pick up and drop off passengers or cargo, such as a loading zone or painted curb region designated for certain temporary idling or stopping activities. The locations may be associated with time of day, holiday, street sweeping or other regulations that may limit when pickups or drop offs may be performed. This information may be updated periodically, for instance every week (or more or less), based on locations where vehicles of the fleet or other vehicles are observed being stopped or pulled over.

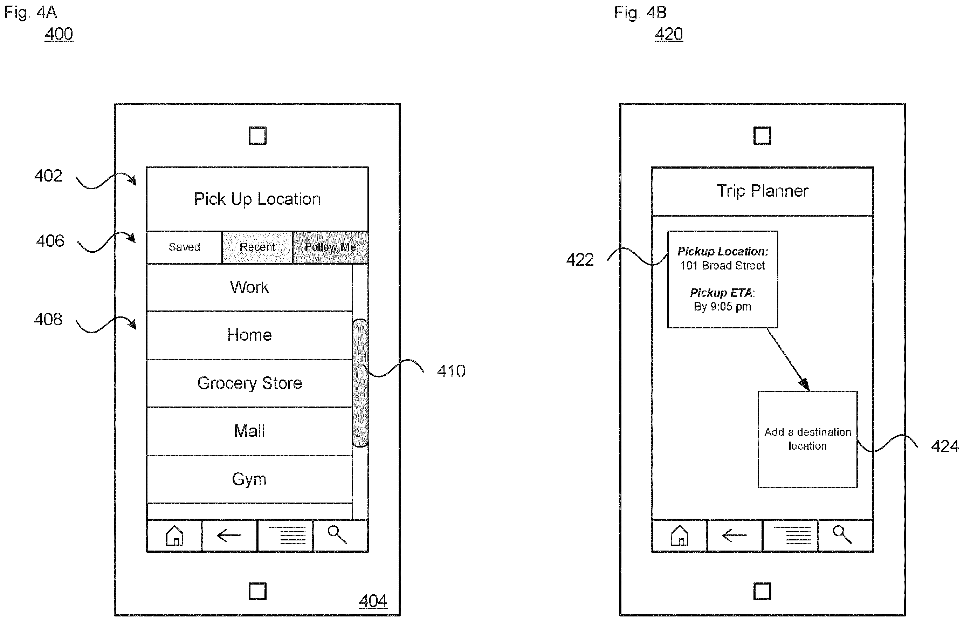

Fig. 4A is an example of a pickup location entry display 400. In this example, display 402 of client device 404 includes different location-related options 406, including saved locations, recent locations, and a "Follow Me" option. As shown, the saved options may include a list of saved location 408 such as the user's home, supermarket, gym, work, the mall, as well as other locations not presented on the display screen but viewable via slider 410. The user may also select the Recent option to review and select from a similar list of recent pickup locations. Similarly, the user may select the Follow Me option 830, which enables loitering by the vehicle to ensure that the user can be picked up promptly (e.g., within 1-2 minutes) or no later than a particular time (e.g., guarantee pickup by 9:05 pm). Loitering can also involve passive engagement, where the vehicle is on call for a user making multiple stops at different locations.

Fig. 4B is an example of a trip planner display 420, which may be presented after the pickup location or the Follow Me option has been selected. Here, the UI display may indicate the pickup location, the pickup ETA, or both the location and the ETA in a first part 422 of the interface. For instance, if the user selects a location based on a Saved or Recent location, it may indicate both the pickup location and time. However, if the Follow Me (e.g., loitering) option is employed, then the pickup ETA may only be presented, as the actual location may not be set or may change depending on what the user is doing. As shown in this example, a destination may be added according to a second part 423 of the interface. In addition, after arriving at a destination, a prompt could be provided to the user via a mobile app or the in-car interface for the same car (or another one) to "stay nearby".

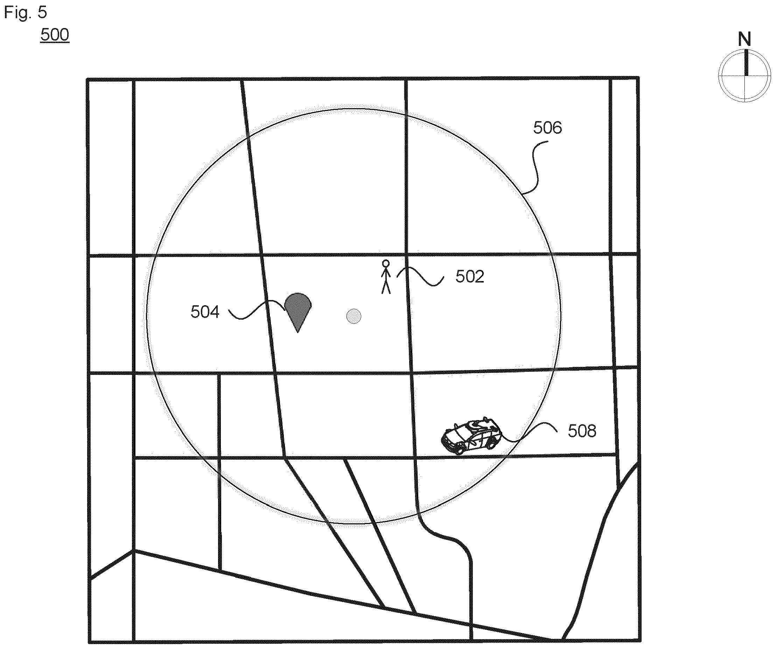

In a scenario where the user has authorized the vehicle to loiter and provide a pickup at a particular time or within a maximum ETA, the vehicle may preposition itself at a nearby location or move as needed to stay within some threshold distance or time window in order to satisfy the user's pickup criteria. For example, Fig. 5 illustrates a scenario 500 showing a map 500 with a user 502 at or near to a location of interest (e.g., a store, building, park, etc.) indicated by pushpin 504. In this example, the system may identify a boundary 506, which may represent a physical distance (e.g., 500 meters, 2 blocks, etc.) or temporal range/limit (e.g., can reach any point within the boundary in less than 5 minutes or by a specific time such as 9:05 pm). Thus, as shown vehicle 508 is positioned within the boundary 506 to ensure pickup of the user 504 in a timely manner. The system may also provide fallback interaction in the event that for some reason pickup timing cannot be guaranteed based on changing circumstances. Alternatively or additionally, the vehicle may maintain a "line of site" with the user. In this case, the vehicle may maintain some distance from the user, but tries to maneuver itself in a way that allows the user to easily see it. For example, pulling over just around the corner may be close, but might make it harder to find the vehicle. Here, the vehicle may instead pull farther down the block, which may be a greater distance than around the corner, but in a direct line of sight of the user.

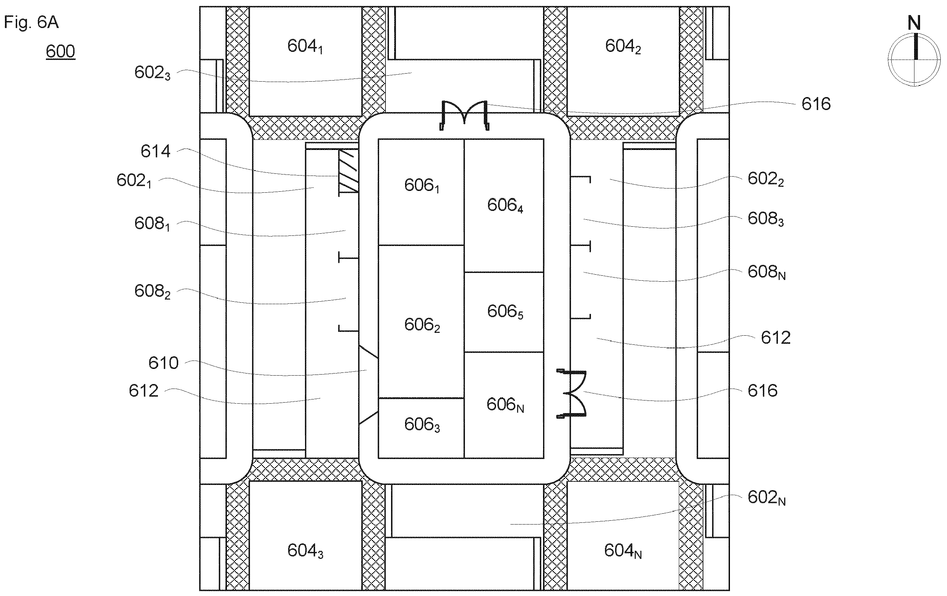

Fig. 6A illustrates a zoomed in example showing a map section 600. In this example, the map section 600 includes a plurality of different features that identify the shape and location of various features such as lanes 602 (e.g., 602₁ ... 602_{N}), intersections 604 (e.g., 604₁ ... 604_{N}), buildings or stores within a building 606 (e.g., 606₁ ... 606_{N}), parking spaces 608 (e.g., 608₁ ... 608_{N}), a driveway entrance (for example to a parking garage or other location) 610, shoulder areas 612, a no parking zone 614, and doors 616 at one or more locations around the building. Together, these features may correspond to a single city block, multiple blocks, or other area. The map section 600 may be a part of the detailed maps described above and used by the various computing devices in order to maneuver the vehicle 100 in an autonomous driving mode.

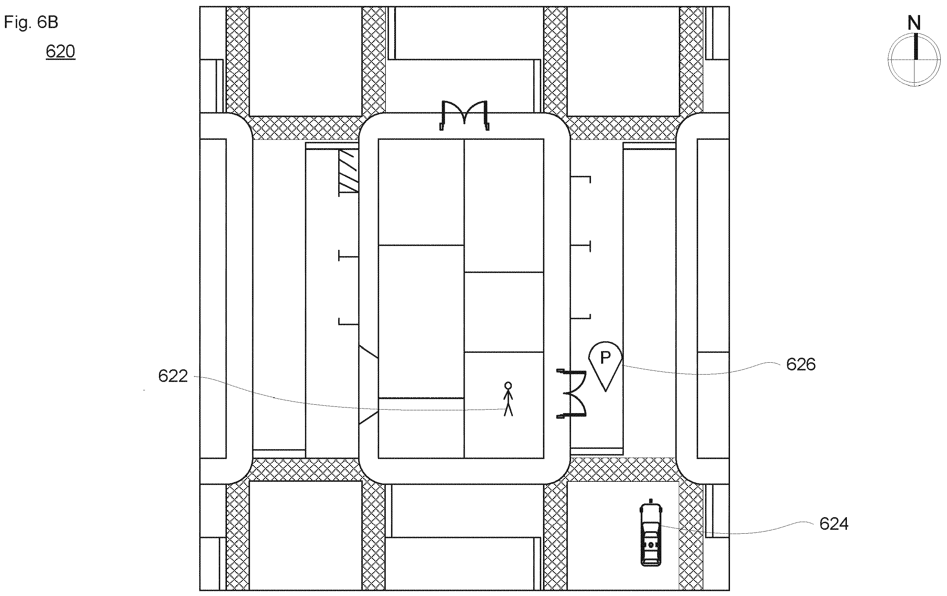

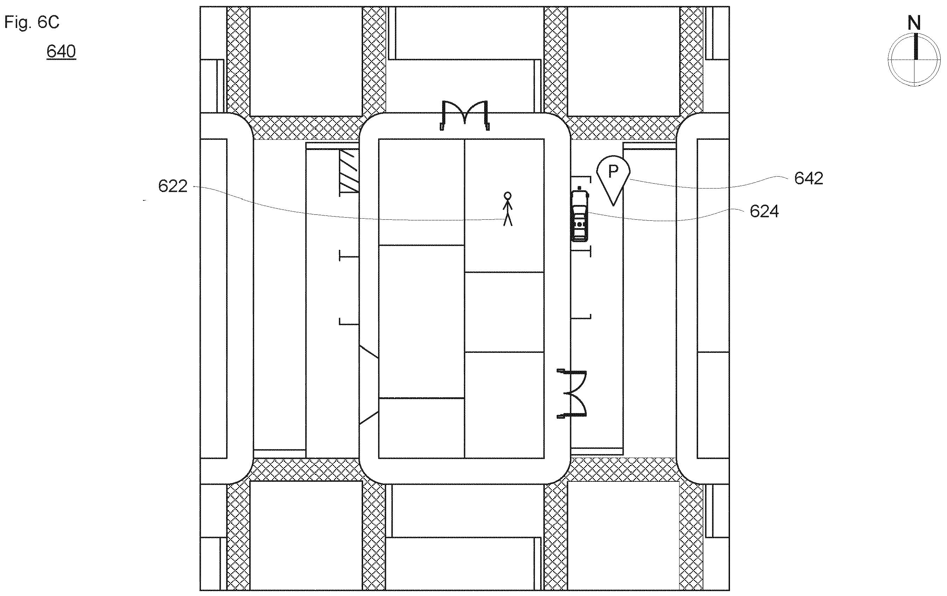

As shown in view 620 of Fig. 6B, customer 622 may be in one of the stores 606 within the building at a given time (e.g., time ti). Based on this, vehicle 624 may plan on a pickup location P as shown at spot 626, which is outside one of the sets of doors of the building. However, as the customer 622 moves around, the system may dynamically adjust the pickup location and/or the vehicle may adjust its positioning. For instance, as seen in view 640 of Fig. 6C, the customer 622 has moved north to a different store within the building. As the new location is closer to the north-facing doors rather than the southeast-facing doors, the vehicle 624 has changed positions and the pickup location may be changed to an updated, more current location 642. In this example, the vehicle may idle in one of the parking spots, if available and permitted by regulation. However, if a parking spot is not available or parking is not currently permitted, the vehicle may move to another location, circle the building, or take another driving action that ensures it can meet the pickup timing requirements for the customer. This could include moving toward driveway entrance 610 (Fig. 6A) or parking in a parking garage onsite or nearby to the building.

The system may use GPS in combination with building information (e.g., entrances, ramps, pickup zones, etc.). The place data may be obtained from the ride service's own mapping efforts or another service (e.g., Google Maps^{™}). The user's device may be queried for the location, and that device could use many possible technologies (GPS, WiFi, Bluetooth, etc.) to provide a location. The location would then be sent via whatever wireless connection the user's device has available to it (e.g., cellular, WiFi, ad-hoc, etc.).

The system could obtain data on where parking meters are located. When there are parking options that include a metered parking spot, the system may re-evaluate where to position the vehicle based on the proximities of the metered parking spot and other parking options to the estimated pickup location. For instance, if the metered parking spot is approximately the same distance or farther than other options, than a non-metered location may be selected for the vehicle to loiter at. But if the metered parking spot is closer and/or provides a line of sight to the pickup location, than the metered parking spot may be selected as the loitering location. Here, the service could pay the meter seamlessly, e.g., billing the user in accordance with a pricing/fee agreement. In one scenario, the customer may be notified about the option to have the vehicle park for a fee (and be close) or roam in the nearby area (but maybe with a slight pickup delay). Alternatively, the vehicle may occupy an empty pay spot without paying, but if another car comes along to use the spot, the vehicle would exit the spot.

The vehicle's position prior to pickup may be varied not only depending on the current location of the user, but also according to the type of information it has about the location. Thus, the boundary (see 506 in Fig. 5) may be enlarged or reduced if the system has a higher or lower confidence in the location information, changes in traffic or weather, or other variables. For instance, the system could adjust how far away the vehicle may be positioned according to the type of location information (e.g., outdoor GPS position versus indoor WiFi estimates as the user walks around inside a mall, arena or other building versus signal strength of a Bluetooth signal). Location information could be used in combination with walking time to that location, because a closer physical location might not always mean the fastest walking time.

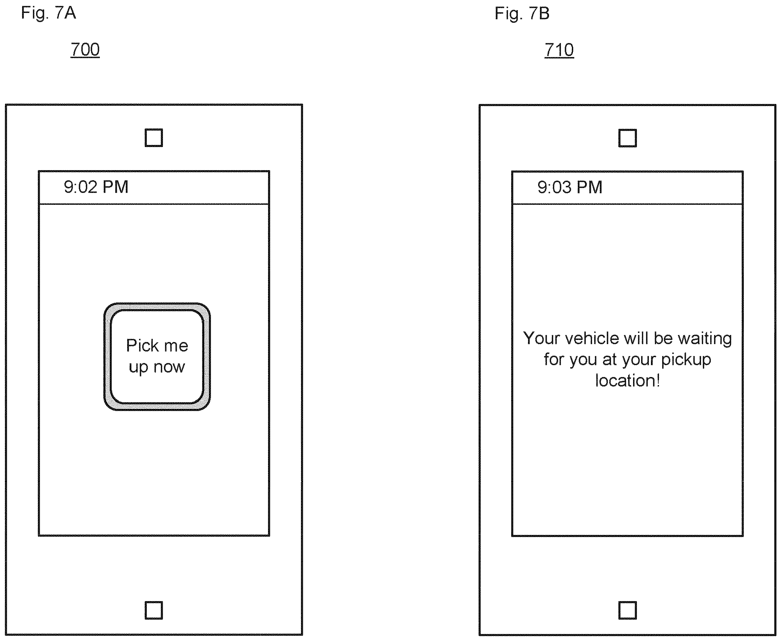

In one scenario, the vehicle may arrive at a planned pickup location on or before the user's desired ETA when it is determined or estimated that the user is within some threshold distance of that location. In another scenario, the user may indicate that he or she is ready for immediate pickup. As shown in view 700 of Fig. 7A, the user may press a button on their device to indicate they are ready (e.g., "Pick me up now" as shown). Alternatively or additionally, the user may speak, make a gesture, provide haptic input (e.g., shake, wave or reorient the device). As shown in view 710 of Fig. 7B, a notification from the vehicle (or ride service) may be presented on the user's device to indicate that the vehicle will be waiting at the pickup location. And in a further scenario, the vehicle may head towards or arrive at the pickup location based on the user's proximity to the pickup location. For instance, if the user is in a store in a shopping complex, and begins to head towards the exit, this may signal that the user is ready to depart the shopping complex. If there is more than one possible pickup location, the system may snap to the closest pickup point for the user. As a result, the vehicle may move to the pickup location (e.g., a loading zone adjacent to the store or a designated parking spot). The vehicle may display one or more visual indicia (e.g., the user's initials or some other unique identifier), so that the user may quickly identify which vehicle to enter. In some situations, the vehicle could indicate that it is "reserved" or "waiting for" someone.

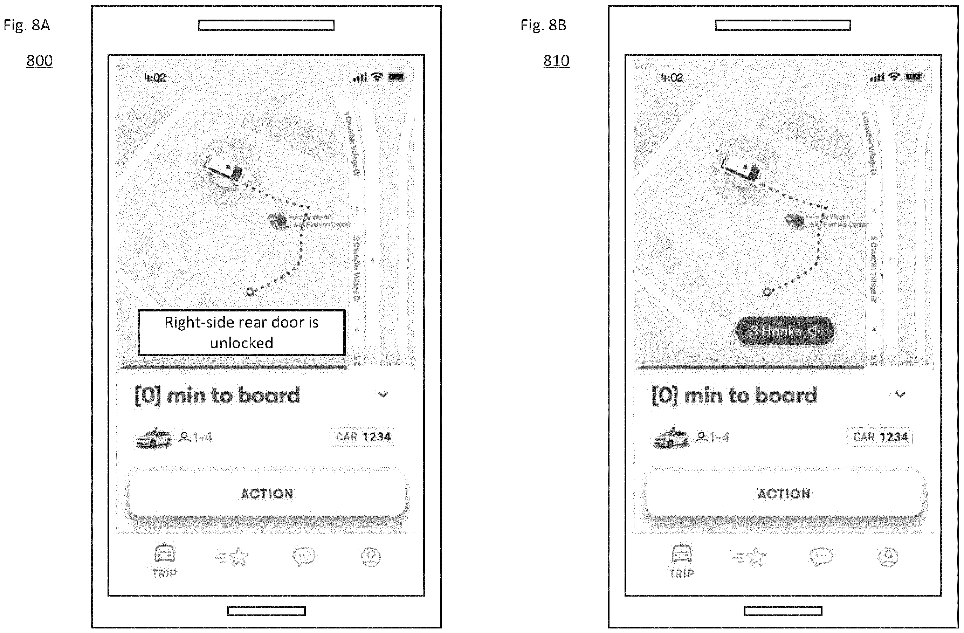

A notification may also be provided to the user's client computing device indicating how to find the vehicle, which door to enter, and/or other useful information to streamline the pickup. Fig. 8A illustrates an example 800 indicating that the right-side rear door of the vehicle is unlocked, and also indicates a dotted path that the rider could follow to quickly access that door. Fig. 8B illustrates another example 810, in which audible cues by the vehicle (e.g., 3 honks) are noted to the rider so that the correct vehicle can be easily identified.

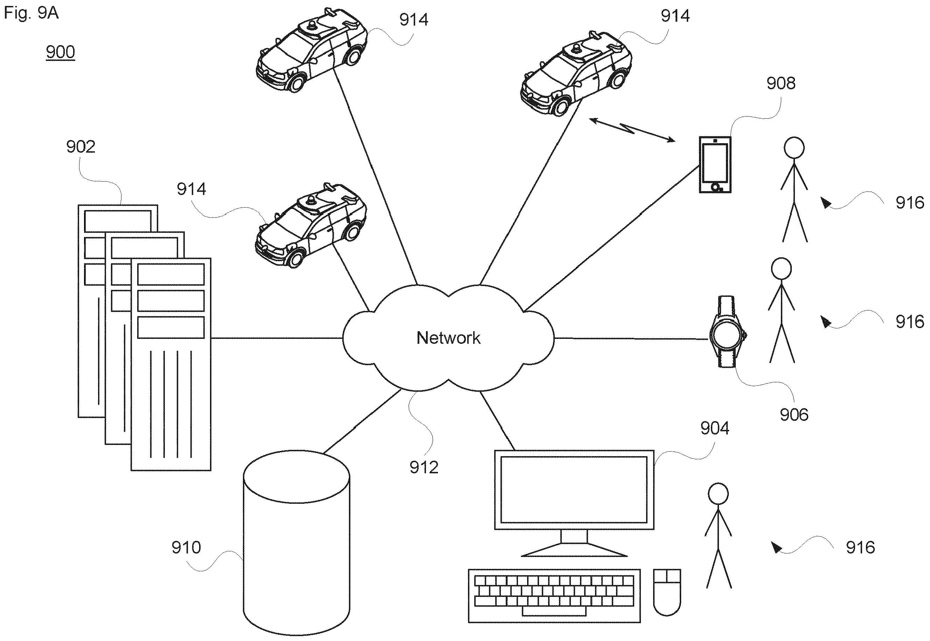

In one implementation, the pickup-related information that is transmitted to the user's personal device originates from the vehicle. For instance, the pickup (or drop off) location and other status information may be identified by the planner module or other part of the onboard processing system. This information may be communicated directly (e.g., via a WiFi connection, Bluetooth ad hoc link or the like) or routed through a remote server (e.g., via a cellular communication link), for instance as part of a fleet management system (see, e.g., Figs. 9A-B, which are discussed further below). In one scenario, the server may decide whether to message the user and how to message the user. In another scenario, the vehicle and the server can both transmit status information to the user's device. This may be done in collaboration between the vehicle and the server, or independently.

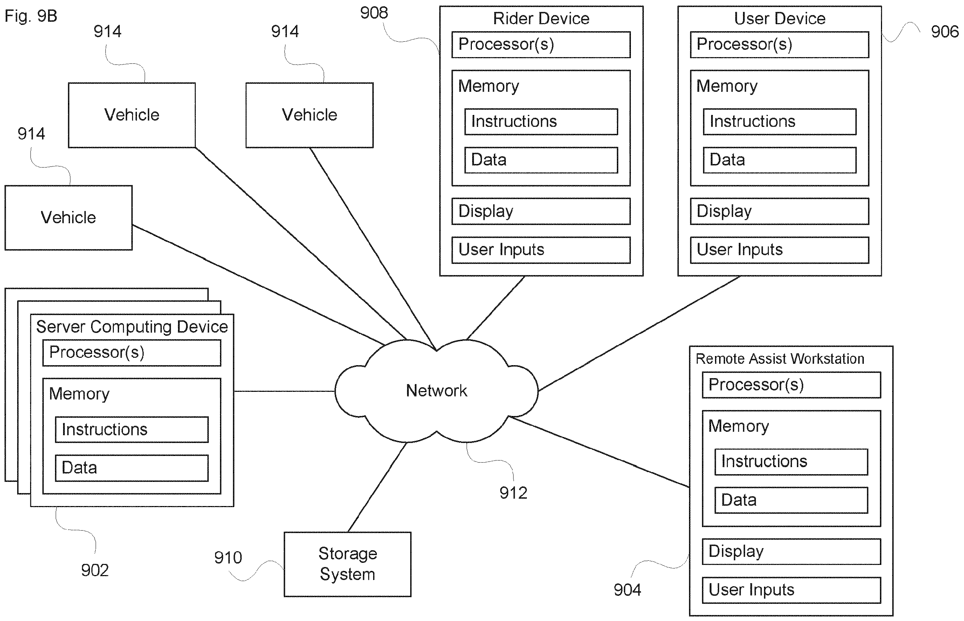

Figs. 9A-B illustrate general examples of how information may be communicated between the vehicle and the user. In particular, Figs.9A and 9B are pictorial and functional diagrams, respectively, of an example system 900 that includes a plurality of computing devices 902, 904, 906, 908 and a storage system 910 connected via a network 912. System 900 also includes vehicles 914, which may be configured the same as or similarly to vehicles 100 and 120 of Figs. 1A-B and 1C-D, respectively. Vehicles 914 may be part of a fleet of vehicles. Although only a few vehicles and computing devices are depicted for simplicity, a typical system may include significantly more.

As shown in Fig. 9B, each of computing devices 902, 904, 906 and 908 may include one or more processors, memory, data and instructions. Such processors, memories, data and instructions may be configured similarly to the ones described above with regard to Fig. 2. The various computing devices and vehicles may communication via one or more networks, such as network 912. The network 912, and intervening nodes, may include various configurations and protocols including short range communication protocols such as Bluetooth^{™}, Bluetooth LE^{™}, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, computing device 902 may include one or more server computing devices having a plurality of computing devices, e.g., a load balanced server farm, that exchange information with different nodes of a network for the purpose of receiving, processing and transmitting the data to and from other computing devices. For instance, computing device 902 may include one or more server computing devices that are capable of communicating with the computing devices of vehicles 914, as well as computing devices 904, 906 and 908 via the network 912. For example, vehicles 914 may be a part of a fleet of vehicles that can be dispatched by a server computing device to various locations. In this regard, the computing device 902 may function as a dispatching server computing system which can be used to dispatch vehicles to different locations in order to pick up and drop off passengers or to pick up and deliver packages or other cargo such as groceries. In addition, server computing device 902 may use network 912 to transmit and present information to a user of one of the other computing devices or a rider of a vehicle. In this regard, computing devices 904, 906 and 908 may be considered client computing devices.

According to one aspect, a particular vehicle of the fleet may be assigned to a rider, and may loiter in the rider's vicinity in order to ensure a pickup by the prescribed time. Alternatively, multiple vehicles of the fleet may loiter in a given area, such as nearby a stadium, arena or concert venue, in order to pick up one or more riders when those riders are ready to depart the facility. In this case, the vehicles may not be preassigned to any particular rider, but may be assigned on demand depending on their proximity to the rider, desired pickup time and/or other factors. In either situation, the vehicle(s) may provide indication to people in the nearby area that it is previously engaged / not for hire (except to the assigned rider). This may be done using visual indicia (e.g., signage) or other means.

As shown in Fig. 9A each client computing device 904, 906 and 908 may be a personal computing device intended for use by a respective user 916, and have all of the components normally used in connection with a personal computing device including a one or more processors (e.g., a central processing unit (CPU)), memory (e.g., RAM and internal hard drives) storing data and instructions, a display (e.g., a monitor having a screen, a touch-screen, a projector, a television, or other device such as a smart watch display that is operable to display information), and user input devices (e.g., a mouse, keyboard, touchscreen or microphone and/or hands-free sensors such as mm-wave sensors). The client computing devices may also include a camera for recording video streams, speakers, a network interface device, and all of the components used for connecting these elements to one another.

Although the client computing devices may each comprise a full-sized personal computing device, they may alternatively comprise mobile computing devices capable of wirelessly exchanging data with a server over a network such as the Internet. By way of example only, client computing devices 906 and 908 may be mobile phones or devices such as a wireless-enabled PDA, a tablet PC, a wearable computing device (e.g., a smartwatch, smart glasses or smart clothing), or a netbook that is capable of obtaining information via the Internet or other networks.

In some examples, client computing device 904 may be a remote assistance workstation used by an administrator or operator to communicate with riders of dispatched vehicles, or users awaiting pickup. Although only a single remote assistance workstation 904 is shown in Figs. 9A-B, any number of such workstations may be included in a given system. Moreover, although workstation 904 is depicted as a desktop-type computer, the workstation 904 may include various types of personal computing devices such as laptops, netbooks, tablet computers, etc.

Storage system 910 can be of any type of computerized storage capable of storing information accessible by the server computing devices 902, such as a hard-drive, memory card, ROM, RAM, DVD, CD-ROM, flash drive and/or tape drive. In addition, storage system 1510 may include a distributed storage system where data is stored on a plurality of different storage devices which may be physically located at the same or different geographic locations. Storage system 910 may be connected to the computing devices via the network 912 as shown in Figs. 9A-B, and/or may be directly connected to or incorporated into any of the computing devices.

In a situation where there are one or more riders, the vehicle or remote assistance may communicate directly or indirectly with the rider client computing device(s). Here, for example, information may be provided to the riders regarding current driving operations, changes to the route in response to the current situation (e.g., traffic), pickup and/or drop off locations with or without indicating a level of uncertainty or variability in the locations, etc. As explained above, information may be passed from the vehicle to the rider or other user. For instance, when the user is awaiting pickup, the vehicle may send pickup information via network 912. However, when the vehicle arrives at the pickup location or the user enters the vehicle, the vehicle may communicate directly with the user's device, e.g., via a Bluetooth^{™} or NFC communication link.

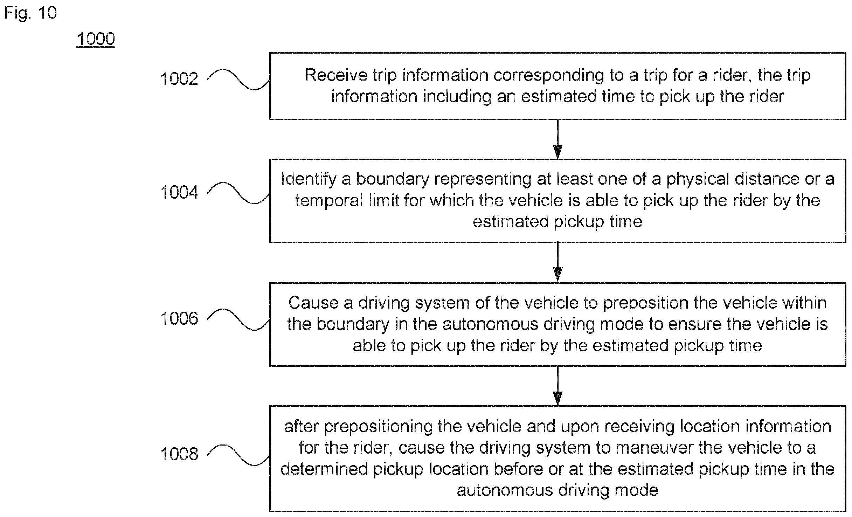

Fig. 10 illustrates a method 1000, in accordance with the foregoing, of managing rider pickups for a vehicle operating in an autonomous driving mode. At block 1002 the method includes receiving, e.g., by one or more processors associated with the vehicle operating in the autonomous driving mode, trip information corresponding to a trip for a rider, the trip information including an estimated time to pick up the rider. At block 1004, a boundary is identified that represents at least one of a physical distance or a temporal limit for which the vehicle is able to pick up the rider by the estimated pickup time. At block 1006, The driving system of the vehicle is caused (e.g., by the processor(s)) to preposition the vehicle within the boundary in the autonomous driving mode to ensure the vehicle is able to pick up the rider by the estimated pickup time. And at block 1008, after prepositioning the vehicle and upon receiving location information for the rider, the driving system is caused (e.g., by the processor(s)) to maneuver the vehicle to a determined pickup location before or at the estimated pickup time in the autonomous driving mode.

Finally, as noted above, the technology is applicable for various types of vehicles, including passenger cars, buses, RVs, delivery trucks or other cargo vehicles, emergency vehicles, construction vehicles, etc.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements. The processes or other operations may be performed in a different order or simultaneously, unless expressly indicated otherwise herein.

## Claims

1. A method of managing rider pickups for a vehicle operating in an autonomous driving mode, the method comprising:
receiving, by one or more processors associated with the vehicle operating in the autonomous driving mode, trip information corresponding to a trip for a rider, the trip information including an estimated time to pick up the rider;
identifying, by the one or more processors, a boundary representing at least one of a physical distance or a temporal limit for which the vehicle is able to pick up the rider by the estimated pickup time;
causing, by the one or more processors, a driving system of the vehicle to preposition the vehicle within the boundary in the autonomous driving mode to ensure the vehicle is able to pick up the rider by the estimated pickup time; and
after prepositioning the vehicle and upon receiving location information for the rider, causing, by the one or more processors, the driving system to maneuver the vehicle to a determined pickup location before or at the estimated pickup time in the autonomous driving mode.

2. The method of claim 1, further comprising:
determining a set of pickup location options at which to pick up the rider by the estimated pickup time; and
selecting a given one of the pickup location options from the set based upon the received location information.

3. The method of claim 2, wherein selecting the given pickup location includes evaluating at least one of traffic congestion, a parking restriction, a loitering restriction, or an adverse environmental condition.

4. The method of any of claims 1-3, further comprising dynamically adjusting the determined pickup location to a different pickup location upon determining that a location of the rider has changed.

5. The method of claim 4,
wherein determining that the location of the rider has changed includes identifying that the rider has moved towards an exit different from an initially identified exit of a place of interest; and/or
wherein the method further comprises providing a notification to the rider identifying a change to the different pickup location.

6. The method of any preceding claim, further comprising:
varying a prepositioned location of the vehicle based on receiving updates to the location information; and/or
varying a prepositioned location of the vehicle based on a confidence value associated with a type of the location information.

7. The method of any preceding claim,
wherein causing the driving system of the vehicle to preposition the vehicle is based at least in part on a walking time to the determined pickup location; and/or
wherein causing the driving system of the vehicle to preposition the vehicle is based at least in part on whether a preposition location has a metered parking spot.

8. The method of any preceding claim, wherein causing the driving system of the vehicle to preposition the vehicle includes evaluating multiple preposition location options based on whether any preposition location option has a line of sight to the determined pickup location.

9. The method of claim 8, wherein the evaluating includes selecting a first one of the multiple preposition location options having the line of sight to the determined pickup location even though the first option is farther from the determined pickup location than another one of the multiple preposition location options.

10. The method of any preceding claim, wherein the location information is either a location of the rider or a location of a client device of the rider.

11. The method of any preceding claim, wherein:
the vehicle is a given vehicle of a fleet of vehicles configured for operation in the autonomous driving mode; and
the method further includes selecting the given vehicle from the fleet of vehicles based on either the given vehicle's proximity to the boundary or the given vehicle's proximity to the determined pickup location.

12. The method of any of claims 1-10, wherein:
the vehicle is one of a fleet of vehicles configured for operation in the autonomous driving mode;
the rider is one of a group of riders; and
the method further includes dispatching one or more vehicles from the fleet of vehicles to pick up the group of riders based on either proximity to the boundary or proximity to the determined pickup location.

13. A vehicle configured to operate in an autonomous driving mode, the vehicle comprising:
a perception system including one or more sensors, the one or more sensors being configured to receive sensor data associated with objects in an external environment of the vehicle;
a driving system including a steering subsystem, an acceleration subsystem and a deceleration subsystem to control driving of the vehicle;
a positioning system configured to determine a current position of the vehicle; and
a control system including one or more processors, the control system operatively coupled to the driving system, the perception system and the positioning system, the control system being configured to:
receive trip information corresponding to a trip for a rider, the trip information including an estimated time to pick up the rider;
identify a boundary representing at least one of a physical distance or a temporal limit for which the vehicle is able to pick up the rider by the estimated pickup time;
cause the driving system of the vehicle to preposition the vehicle within the boundary in the autonomous driving mode to ensure the vehicle is able to pick up the rider by the estimated pickup time; and
after prepositioning the vehicle and upon receiving location information for the rider, cause the driving system to maneuver the vehicle to a determined pickup location before or at the estimated pickup time in the autonomous driving mode.

14. The vehicle of claim 13, wherein the control system is further configured to:
determine a set of pickup location options at which to pick up the rider by the estimated pickup time; and select a given one of the pickup location options from the set based upon the received location information; and/or
dynamically adjust the determined pickup location to a different pickup location upon determining that a location of the rider has changed.

15. The vehicle of claim 13, wherein causing the driving system of the vehicle to preposition the vehicle is based at least in part on one or more of:
a walking time to the determined pickup location;
whether a preposition location has a metered parking spot; or
evaluation of multiple preposition location options based on whether any preposition location option has a line of sight to the determined pickup location.
